Europäisches Patentamt

European Patent Office

Office européen des brevets

(11) Publication number: **0 066 412**
A1

## (12) EUROPEAN PATENT APPLICATION

(21) Application number: **82302539.0**

(22) Date of filing: **18.05.82**

(51) Int. Cl.³: **H 04 B 1/60**
**G 11 B 5/027**

(30) Priority: **28.05.81 JP 81609/81**

(43) Date of publication of application:
**08.12.82 Bulletin 82/49**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Usui, Yuzo**
**Mezon Hisasue 104 473, Hisasue Takatsu-ku**
**Kawasaki-shi Kanagawa 213(JP)**

(74) Representative: **Allman, Peter John et al,**
**Marks and Clerk Scottish Life House Bridge Street**
**Manchester M3 3DP(GB)**

(54) **Method of processing analog signals.**

㊼ Analog signals having a maximum frequency component Fm are separated into at least two kinds of sampled pulse series and transmitted by different transmission lines or stored into different memory regions. When the frequencies of two sampling pulses are designated by $F_1$ and $F_2$, the two frequencies maintain a relation of $F_1 + F_2 \geq 2Fm$. More than two sampled pulse series transmitted through the transmission lines or read from the memory regions are synthesized in time series, so as to reproduce the analog signal.

*Fig. I*

EP 0 066 412 A1

## METHOD OF PROCESSING ANALOG SIGNALS

The present invention relates to a method of processing analog signals, and more specially to a method which transmits analog signals through transmission paths having relatively narrow bands or which stores analog signals in memory regions.

BACKGROUND OF THE INVENTION

When the signals of bands extending to high frequency regions are to be transmitted or stored in the recording medium, the transmission paths or recording medium must be capable of meeting such bands.

When the analog signals are to be sampled, the sampling theorem teaches that the sampling frequency must be at least twice as great as the maximum frequency component contained in the analog signals. When the sampling frequency is smaller than the above value or when signals of higher frequencies are applied, frequency components different from the original signals develop, and this frequency component is caused by being reflected at the half frequency of the sampling frequency. This is known as aliasing noise.

OBJECTS AND SUMMARY OF THE INVENTION

An object of the present invention is to provide a method of processing analog signals which utilizes positively the aliasing noise.

Another object of the present invention is to provide a method of recording or transmitting signals of high-frequency bands using a plurality of recording tracks or a plurality of circuits, particularly when the signals are to be recorded in a tape recorder which is not capable of recording signals of high frequencies or when a limitation is imposed on the bands of the circuits.

First, the gist of the present invention resides in a method in which analog signals having a maximum frequency component Fm are sampled with at least two sampling pulses (which, respectively, have frequencies $F_1$, $F_2$ maintaining a relation $F_1 + F_2 \geq 2Fm$), the sampled pulses are transmitted through separate transmission paths or are stored in memory regions, and sampling pulses transmitted through said transmission paths or read from said memory regions are synthesized in time series to reproduce said analog signals. Second, the gist of the present invention resides in a method in which analog signals having a maximum frequency component Fm are sampled with a sampling pulse (having a frequency Fo which maintains a relation $Fo \geq 2Fm$), a train of sampled pulses is divided into two or more series of sampled pulses and are transmitted through different transmission paths or are stored in memory regions, and said two or more series of sampled pulses transmitted through said transmission paths or read from said memory regions are synthesized in time series to reproduce said analog signals.

Further features and advantages of the present invention will be apparent from the ensuing description with reference to the accompanying drawings to which, however, the scope of the invention is in no way limited.

BRIEF DESCRIPTION OF THE DRAWINGS

Fig. 1 is a block diagram illustrating one embodiment of the present invention;

Figs. 2A, 2B, 2C, 2D are circuit diagrams and characteristics showing in detail each block shown in the block diagram of Fig. 1;

Fig. 3 is a time chart showing the operation waveforms at each of the portions in Fig. 1;

Fig. 4 is a block diagram illustrating another embodiment of the present invention; and

Fig. 5 is a time chart showing the operation waveforms at each of the portions in Fig. 4.

DETAILED EXPLANATION OF THE INVENTION

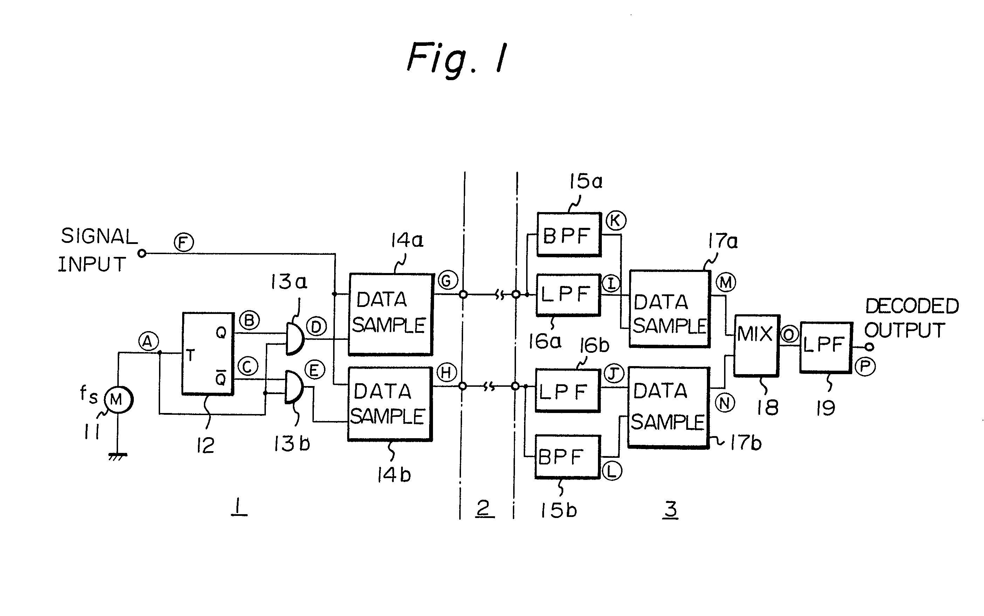

Fig. 1 is a block diagram illustrating an embodiment of the present invention. In Fig. 1, reference numeral 1 denotes an encoder, 2 denotes transmission lines or memory regions that serve as a recording medium in a recorder or the like, and 3 denotes a decoder.

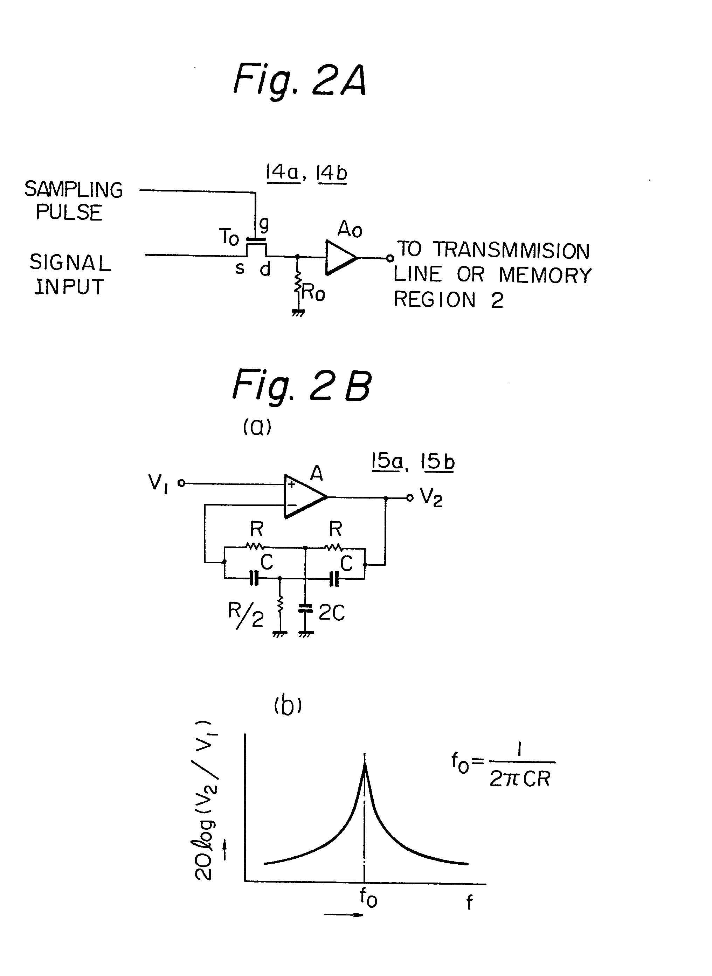

The decoder 1 includes, as shown in Fig. 1, a sampling pulse signal source 11, a frequency divider 12 which is connected to the sampling pulse signal source 11, AND gates 13a, 13b having inputs which receive the outputs Q, $\bar{Q}$ of the frequency divider 12 and the output of the sampling pulse signal source 11, sample holding circuits 14a, 14b which receive a signal input from input terminal and the outputs of the AND gates and which apply the outputs to a transmission line or to a memory region. Each of the sample holding circuits 14a, 14b includes, as shown in Fig. 2A, a FET transistor $T_0$ , a resistor $R_0$ and an amplifier $A_0$. The FET transistor $T_0$ has a gate g which receives a sampling pulse, a source s which receives a signal input and a drain d which is connected to a connection point of the resistor $R_0$ and the amplifier $A_0$.

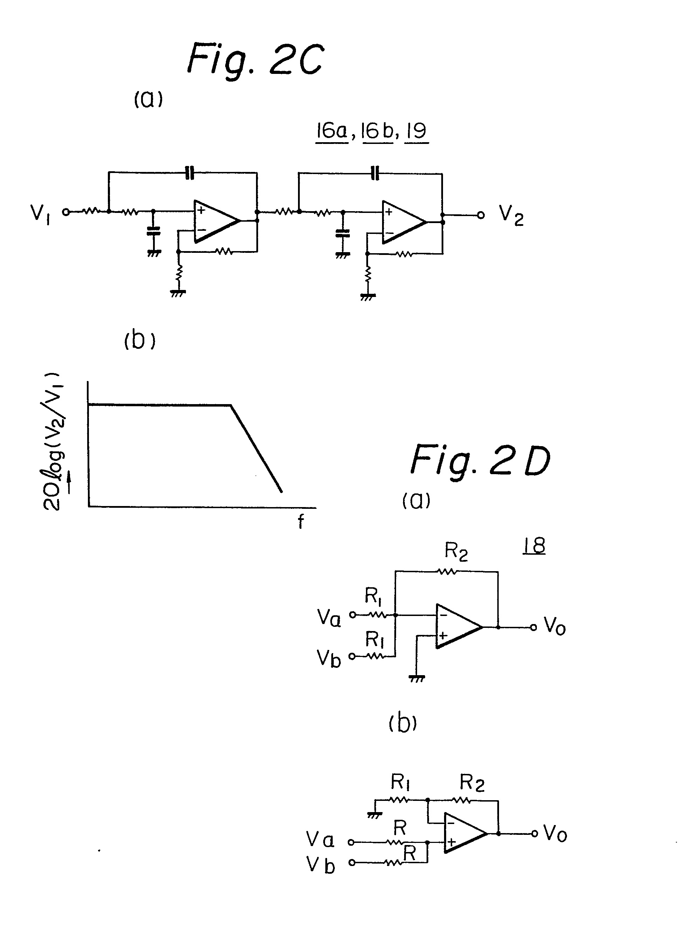

The decoder includes, as shown in Fig. 1, bandpass filters 15a, 15b, and lowpass filters 16a, 16b, which are connected to the transmission line or the memory region 2, sample holding circuits 17a, 17b which are connected to the outputs of the bandpass filters 15a, 15b, respectively, and to the outputs of the lowpass filters 16a, 16b, respectively, a synthesizing circuit 18 which is connected to the outputs of the sample hold circuits 17a, 17b, and a lowpass filter 19 which is connected to the synthesizer 18. Each of the bandpass filters 15a, 15b includes, for example as shown in Fig. 2B (a), resistors R, $\frac{R}{2}$ , capacitors C, 2C, and an amplifier A, and the passing frequency $f_0$ of the amplifier is $\frac{1}{2\pi CR}$ as shown in Fig. 2B (b). As the lowpass filters 16a, 16b, 19, a well known circuit, shown in Fig. 2C (a), which has a roll-off character -24 dB/octave, shown in Fig. 2C (b), can be used. As the synthesizer 18, a circuit shown in Fig. 2D (a) or Fig. 2D (b) can be used. In the circuit shown in Fig. 2D (a),

$$V_0 = -\frac{R_2}{R_1}(V_a + V_b)$$

and when $R_1 = R_2$ , $V_0 = -(V_a + V_b)$.

In the circuit shown in Fig. 2D (b),

$$V_0 = \frac{1}{2}(1 + \frac{R_2}{R_1})(V_a + V_b)$$

and when $R_1 = R_2$ , $V_0 = V_a + V_b$.

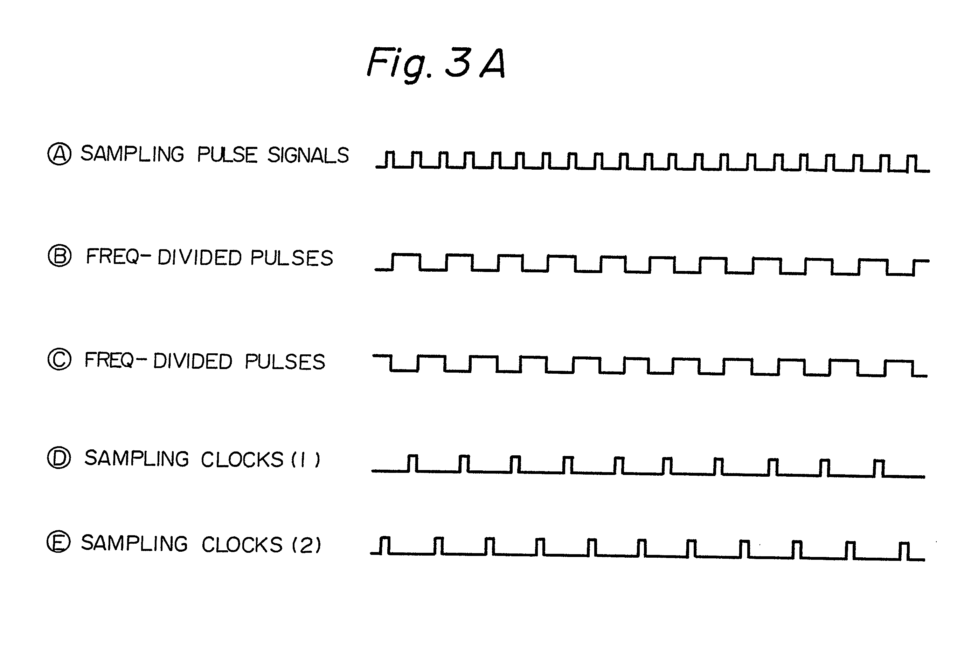

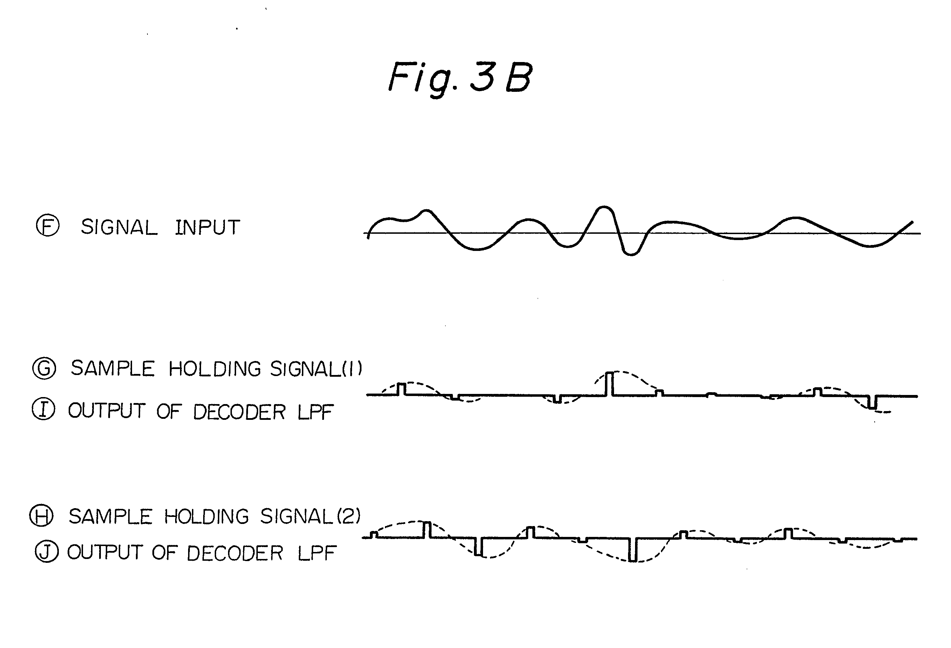

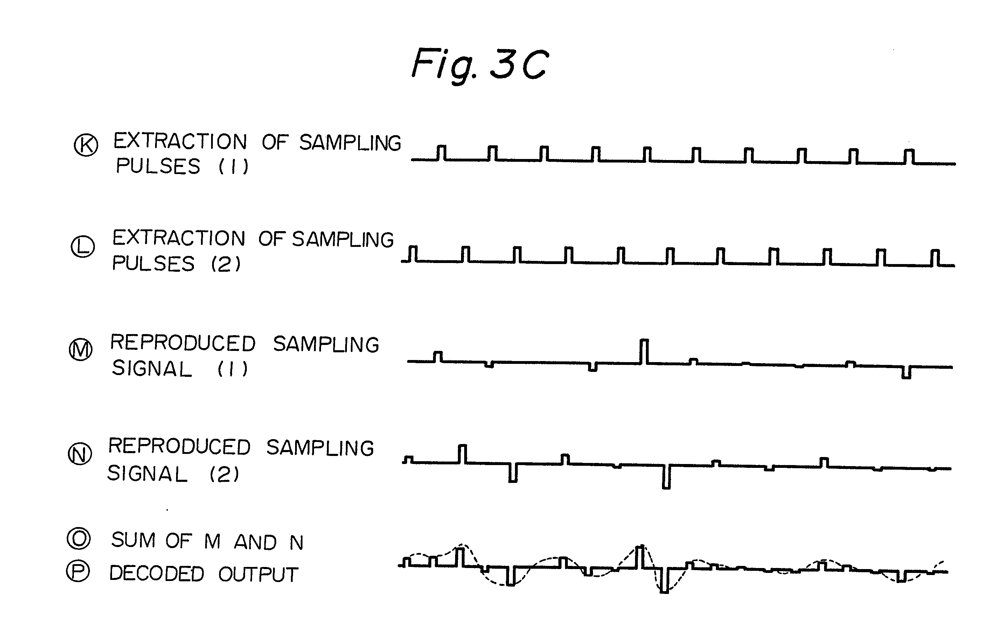

Next, we will explain the operation of the circuit shown in Fig. 1, with reference to the time chart shown in Fig. 3.

Signal inputs Ⓕ consist of analog signals as shown in Fig. 3Ⓕ, and their maximum frequency component is denoted by Fm. The sampling pulse signal source 11 generates sampling pulse signals Ⓐ shown in Fig. 3Ⓕ of a frequency Fs. The frequency Fs is so selected that a relation between the frequency Fs and the frequency component Fm is Fs $\geq$ 2Fm. The frequency of the sampling pulse signals Ⓐ is divided into half, as shown in Fig. 3 Ⓑ Ⓒ, i.e., divided into Fs/2 by a frequency divider 12, whereby pulse signals Ⓑ and Ⓒ of opposite phases are produced. The signals Ⓑ and Ⓒ are fed to AND gates 13a, 13b together with the sampling pulse signals Ⓐ. The AND gates 13a, 13b, therefore, produce outputs Ⓓ and Ⓔ shown in Fig. 3 Ⓓ, Ⓔ which serve as sample clocks. The sample clocks are then fed to sample holding circuits 14a, 14b which have the same construction as shown in Fig. 2A.

Since signal inputs Ⓕ are fed to the data terminals of the sample holding circuits 14a, 14b, sample holding signals Ⓖ, Ⓗ shown in Fig. 3 Ⓖ Ⓗ are produced responsive to the outputs of the AND gates 13a, 13b, i.e., responsive to the sampling clocks. The signals Ⓖ, Ⓗ are transmitted through separate circuits or are recorded in the recording tracks (denoted by 2 in Fig. 1). In this case, the band of the transmission paths or of the recording tracks needs to be one-half the maximum frequency of the signals Ⓕ. The reasons will be described later. It will be noted that the present invention is advantageous with regard to the fact that the band does not need to cover the maximum frequency Fm of the signals (F). The signals (G),
(H) transmitted through the transmission paths or the
signals (G), (H) read from the recording tracks are fed to
band-pass filters 15a, 15b and to low-pass filters 16a, 16b.

Here, the central frequency of the band-pass filters
15a, 15b is Fs/2, and the low-pass filters 16a, 16b have a
cut-off frequency of 1/4 Fs. The transmission paths 2 have
a band Fs/4, as well as a component Fs/2, though Fs/2 is
attenuated to a considerable degree. The signal component Fs/2 is extracted by the band-pass filters 15a, 15b,
as shown in (K), (L) of Fig. 3.

On the other hand, sampled pulses which are transmitted
through the transmission paths, or which are read from the
recording tracks, are maintained for their amplitude.
Therefore, outputs of the low-pass filters 16a, 16b are
enveloped by broken lines, as shown in the diagrams (I)
and (J) in Fig. 3 (I), (J). From the sampling theorem,
these signals form envelopes of the sampling pulse series of
Fs/2. Therefore, the maximum frequency component is Fs/4.
It will, therefore, be comprehended that the band of the
transmission paths or the recording tracks must be Fs/4.
The signals (I), (J) of envelopes are then fed to sample
holding circuits 17a, 17b which produce pulse trains (M), (N)
as shown in Fig. 3 (M), (N), that are sampled and held by
the reproduced sampling clocks (K), (L). These pulse
trains (M), (N) are fed to the synthesizing circuit 18 and
are synthesized in time series to form a train (O) of pulse
signals, as shown in Fig. 3 (O). Here, the repetitive
frequency of the train (O) of pulse signals is Fs. By
passing the signals through a low-pass filter 19 having a
cut-off frequency Fs/2, therefore, it is possible to reproduce the decoded output signals (P) shown in Fig. 3 (P),
which are the same as the original signals (F) having a
maximum frequency component Fs/2.

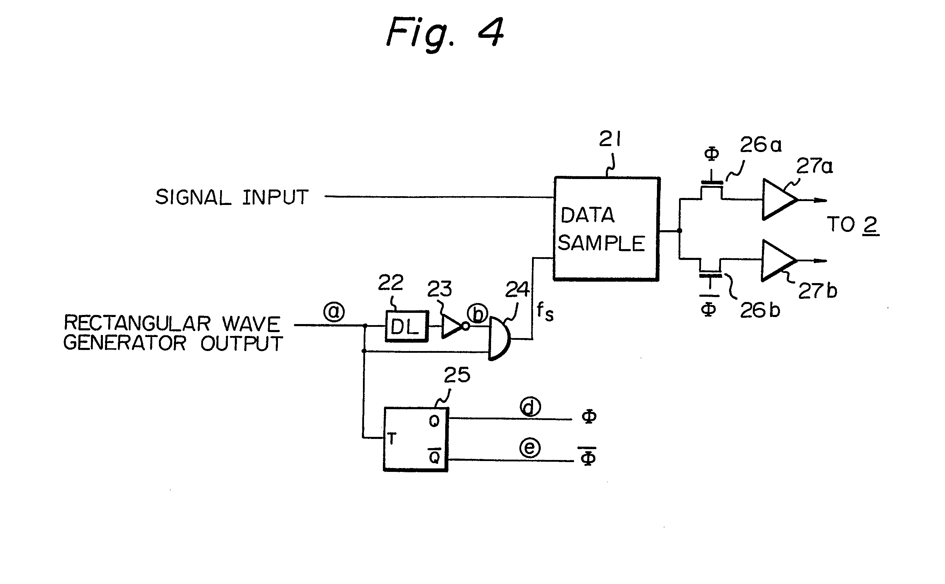

Fig. 4 shows a block diagram of the circuit of another
embodiment of the present invention. In the embodiment
shown in Fig. 4, an analog signal, having the frequency component of the maximum frequency Fm, is sampled by one sampling pulse, the sampled pulse series is separated into two pulse series, and the separated pulse series are transmitted by two transmission lines or stored in two memory regions.  In another embodiment, the decoder is formed the same as shown in Fig. 1; therefore, the explanation is not repeated, and in Fig. 4, the decoder is not shown.

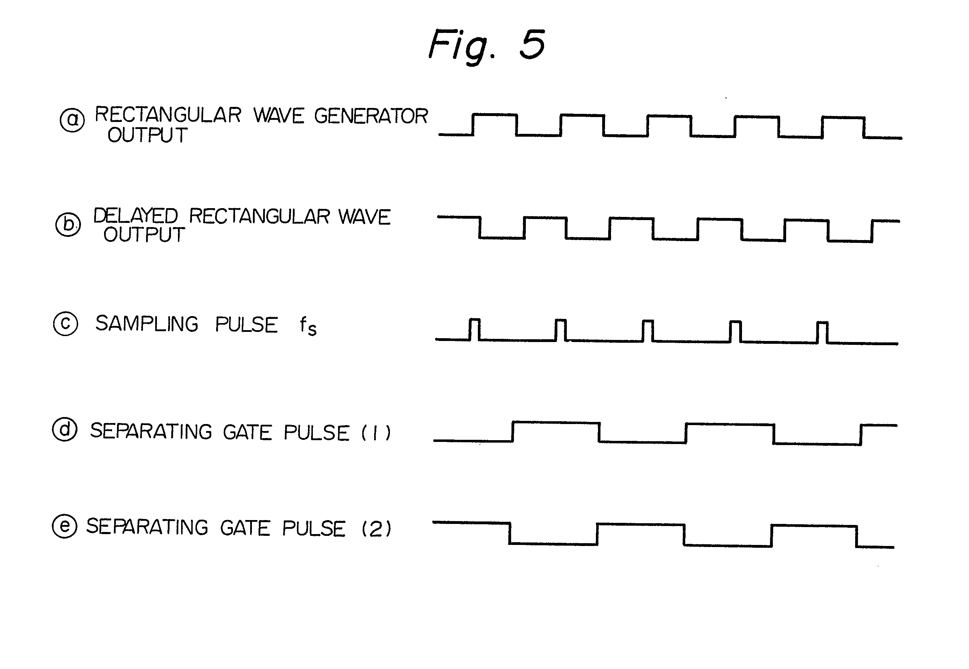

In Fig. 4, a sample hold circuit 21 has inputs for receiving the signal input and the sampling pulse $f_s$ , so that the input data are sampled by the sampling pulse $f_s$ and said sample hold circuit 21 outputs the sampled pulse series.  These sampling pulses $f_s$ ⓒ shown in Fig. 5 ⓒ are formed, for example as shown in Fig. 4, by adding, in the AND gate, the output of a rectangular pulse generator, as shown in Fig. 5 ⓐ, and the output, as shown in Fig. 5 ⓑ, which is obtained by delaying the output of the rectangular pulse generator in a delay circuit 22 and by inverting the output of the delay circuit 22 in an inverter 23.

The sampling pulse series obtained as the output of the sample hold circuit 21 is supplied to separating gate circuits 26a, 26b, so as to be separated into two sampling series, and the outputs of the separating gate circuits 26a and 26b are supplied to the transmission circuit or the memory regions 2.  The separating gete pulses ⓓ and ⓔ as shown in Fig. 5 ⓓ ⓔ which are supplied to the separating gate circuits 26a, 26b are obtained as the output of a flip-flop circuit 25, for example, as shown in Fig. 4, by applying the output of the rectangular pulse generator, shown in Fig. 5 ⓐ, to a flip-flop circuit 25, which is operated at a fall time of the output of the rectangular pulse generator shown in Fig. 5 ⓐ.

The embodiment shown in Fig. 4 can produce the same effect as the circuit shown in Fig. 1.

As mentioned above, according to the present invention, the analog signal is separated into a plurality of pulse series which are transmitted to the transmission lines or which are supplied to the memory regions. Therefore, the transmission lines or the memory regions having small frequency bands can be used; therefore, a great industrial advantage can be obtained. Further, in the explanation above, the analog signal is divided into two pulse series; however, it is, of course, possible to have a case where the analog signal is divided into more than two pulse series.

- 8 -

0066412

## CLAIMS

1. A method of processing analog signals characerized in that analog signals having a maximum frequency component Fm are sampled with at least two sampling pulses (which, respectively, have frequencies $F_1$ , $F_2$ maintaining a relation $F_1 + F_2 \geq 2Fm$), the sampled pulses are transmitted through separate transmission paths or are stored in memory regions, and sampling pulses transmitted through said transmission paths or read from said memory regions are synthesized in time series to reproduce said analog signals.

2. A method of processing analog signals characerized in that analog signals having a maximum frequency component Fm are sampled with a sampling pulse (having a frequency Fo which maintains a relation $Fo \geq 2Fm$), a train of sampled pulses is divided into two or more series of sampled pulses and are transmitted through different transmission paths or are stored in memory regions, and said two or more series of sampled pulses transmitted through said transmission paths or read from said memory regions are synthesized in time series to reproduce said analog signals.

# Fig. 1

SIGNAL INPUT — Ⓕ

fs — Ⓜ 11

12 — T, Q Ⓑ, Q̄ Ⓒ, Ⓐ

13a Ⓓ, 13b Ⓔ

14a DATA SAMPLE Ⓖ

14b DATA SAMPLE Ⓗ

1

2

15a BPF Ⓚ

16a LPF Ⓘ

16b LPF Ⓙ

15b BPF Ⓛ

17a DATA SAMPLE Ⓜ

17b DATA SAMPLE Ⓝ

18 MIX Ⓞ

19 LPF Ⓟ

DECODED OUTPUT

3

1 / 8

0066412

## Fig. 2A

SAMPLING PULSE

SIGNAL INPUT

14a, 14b

$T_0$    g    $A_0$

s    d

$R_0$

TO TRANSMMISION LINE OR MEMORY REGION 2

## Fig. 2 B

(a)

$V_1$    A    15a, 15b

$V_2$

R    R

C    C

R/2    2C

(b)

$20 \log (V_2 / V_1)$

$f_0 = \dfrac{1}{2\pi CR}$

$f_0$    f

Fig. 2C

(a)

16a, 16b, 19

$V_1$ ○———  ———○ $V_2$

(b)

$20 log(V_2/V_1)$

$f$

Fig. 2D

(a)

$R_2$   18

$R_1$

$V_a$ ○———

$R_1$

$V_b$ ○———   ○ $V_o$

(b)

$R_1$   $R_2$

$V_a$ ○———   $R$

$V_b$ ○———   $R$   ○ $V_o$

# Fig. 3 A

Ⓐ SAMPLING PULSE SIGNALS

Ⓑ FREQ-DIVIDED PULSES

Ⓒ FREQ-DIVIDED PULSES

Ⓓ SAMPLING CLOCKS (1)

Ⓔ SAMPLING CLOCKS (2)

4/8

# Fig. 3 B

Ⓕ SIGNAL INPUT

Ⓖ SAMPLE HOLDING SIGNAL(1)
Ⓘ OUTPUT OF DECODER LPF

Ⓗ SAMPLE HOLDING SIGNAL(2)
Ⓙ OUTPUT OF DECODER LPF

0066412

## Fig. 3C

Ⓚ EXTRACTION OF SAMPLING
PULSES (1)

Ⓛ EXTRACTION OF SAMPLING
PULSES (2)

Ⓜ REPRODUCED SAMPLING
SIGNAL (1)

Ⓝ REPRODUCED SAMPLING
SIGNAL (2)

Ⓞ SUM OF M AND N
Ⓟ DECODED OUTPUT

6/8

# Fig. 4

SIGNAL INPUT ——— DATA SAMPLE [21]

26a / 27a → TO $\underline{2}$

27b / 26b

RECTANGULAR WAVE GENERATOR OUTPUT — ⓐ [22 DL] [23] ⓑ [24] $f_s$

[25] T — Q ⓓ $\Phi$ — $\overline{Q}$ ⓔ $\overline{\Phi}$

7 / 8

0066412

## Fig. 5

(a) RECTANGULAR WAVE GENERATOR OUTPUT

(b) DELAYED RECTANGULAR WAVE OUTPUT

(c) SAMPLING PULSE $f_s$

(d) SEPARATING GATE PULSE (1)

(e) SEPARATING GATE PULSE (2)

0066412

## European Patent Office

## EUROPEAN SEARCH REPORT

Application number

EP 82 30 2539

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-C- 969 818 (MAX-GRUNDIG) <br> * Page 1, lines 1,2; page 2, lines 17-36; page 3, lines 75-98 * <br> --- | 1,2 | H 04 B 1/66 <br> G 11 B 5/027 |
| X | FR-A-1 170 265 <br> (THOMSON-HOUSTON) <br> * Page 1, left-hand column, lines 12-20; page 2, right-hand column, lines 8-39; page 5, abstract * <br> ----- | 1,2 | |

TECHNICAL FIELDS
SEARCHED (Int. Cl. 3)

H 04 B 1/66
G 11 B 5/027

The present search report has been drawn up for all claims

| Place of search | Date of completion of the search | Examiner |
|---|---|---|
| THE HAGUE | 31-08-1982 | LAMADIE G.Y.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82